# EUROPEAN PATENT APPLICATION

(11) **EP 1 671 905 A1**
(43) Date of publication of application: **21.06.2006**
(21) Application number: 05026689.9
(22) Date of filing: 07.12.2005
(51) Int. Cl.: B65G 47/51

(54) **Transferring station for moving items from one conveyor to another**

(30) Priority: 14.12.2004 IT BO20040764
(71) Applicant: MARCHESINI GROUP S.p.A., 40065 Pianoro (Bologna) (IT)
(72) Inventor: Monti, Giuseppe, 40065 Pianoro (Bologna) (IT)
(74) Representative: Dall'Olio, Giancarlo

(57) **Abstract**

The proposed station (1) for connecting a first line (3) for conveying items (2) with a second line (4) for transferring the items, in particular for feeding a packaging machine includes storage means (5), situated near the lines (3, 4) for receiving items (2) coming from the first conveying line (3).

Manipulating means (6) move the items (2) between the lines (3, 4) and the storage means (5).

## Description

The present invention relates to automatic packaging into blister packs of various items, in particular vials, syringes, tablets, pills, capsules and the like, for pharmaceutical and/or food use.

In particular, the invention refers to a station for connecting a first line for conveying items with a second line for transferring the same items, in particular for feeding a packaging machine, e.g. a boxing machine.

Known transferring apparatuses include manipulating means, which are capable of picking up items, arranged within seats or in bulk, from a first conveying line, and of bringing them into compartments of a second conveying line, provided e.g. for feeding a boxing machine.

According to specifications, the manipulating means can bring one or more items into the compartment of the second feeding line, so as to define a pile of items.

An important disadvantage of such apparatuses lies in the fact that a stop of the boxing machine, and consequently a stop of the second conveying line, must necessarily impose a stop of the first line for conveying items.

This can cause problems of variable entity and gravity, depending on the nature of the upstream system, which feeds the first conveying line.

In particular, there are special types of systems usually operating upstream, which are strongly affected by the downtime, due to considerable problems, which can be caused by its restarting, like for example in case of blistering machines, heat-forming machines, etc.

Obviously, the production rate of the whole system is lowered, which puts at risk the quality of the products released by the boxing machine.

The object of the present invention is to propose a station for connecting a first line for conveying items with a second line for transferring the items, in particular for feeding a packaging machine, which makes the operation of the first conveying line independent from the operation of the second transferring line, so that possible abnormalities of the one line does not affect the correct operation of the other one.

Another object of the present invention is to propose a station, which ensures high reliability and versatility standards in any operation condition, allowing an adjustment of the production rate to the specifics of the packaging cycle and of the items size, in a particularly rapid and easy way.

A further object of the present invention is to propose an extremely functional station, which ensures particularly rapid and easy installation and maintenance interventions.

The above mentioned objects are obtained in accordance with the contents of the claims.

The characteristic features of the invention will be pointed out in the following description of some preferred but not exclusive embodiments, with reference to the enclosed figures, in which:
- Figures 1A, 1B are schematic, top views of as many particularly significant operation steps of a first embodiment of the station proposed by the present invention;
- Figures 2A, 2B are schematic, top views of as many particularly significant operation steps of a second embodiment of the station proposed by the present invention;
- Figures 3A, 3B are schematic, front views of an element of the station indicated in Figures 2A, 2B, in corresponding operation steps;
- Figures 4A, 4B are schematic, corresponding lateral and top views of the element shown in Figures 3A, 3B, in a general operation step;
- Figures 5A, 5B are schematic top views of relative constructive variants of the station according to a fourth embodiment.

Regards the above Figures, the reference number 1 indicates the proposed station for connecting a first line 3 for conveying items with a second line 4 for transferring the same items, in particular for feeding a packaging machine, e.g. a boxing machine.

For instance, the first line 3 and the second line 4 are operated so as to move in parallel feeding directions W3, W4, especially with the respective terminal section 3a and initial section 4a, placed partially one beside the other.

However, the first line 3 and the second line 4 can be placed angularly in any way, e.g. operated in feeding directions W3, W4, orthogonal to each other.

The station 1, proposed by the invention, includes storage means 5, situated near the terminal section 3a and the initial section 4a of the lines 3, 4, so as to receive items 2 coming from the first conveying line 3, and manipulating means 6, operated in step relation with the operation of the lines 3, 4, and aimed at moving the items 2 between the first line 3 and the second line 4, and the storage means 5.

In particular, the manipulating means 6, having e.g. two or three axes, can pick up items 2 in the terminal section 3a of the first line 3 and release them in the initial section 4a of the second line 4, or in the storage means 5, and they can pick up the items 2 from the storage means 5 and release them to the same initial section 4a of the second line 4.

The storage means 5 can be situated beside one, or both lines 3, 4, depending on the specifics of the system, in which the proposed station 1 works.

Otherwise, the storage means 5 can be situated between the lines 3, 4.

Likewise, the 5 can be aligned with one, or both terminal section 3a and initial section 4a, of the first line 3 and second line 4, respectively.

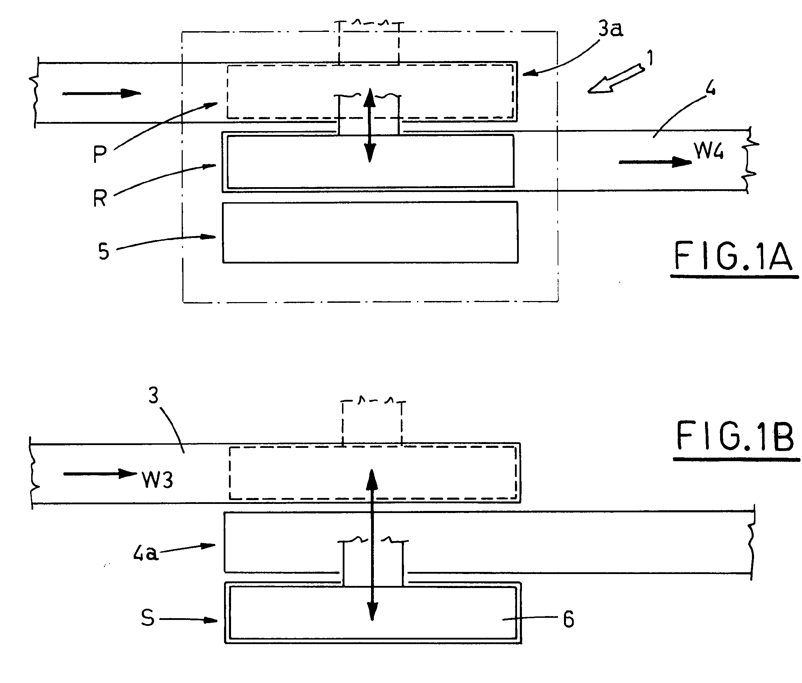

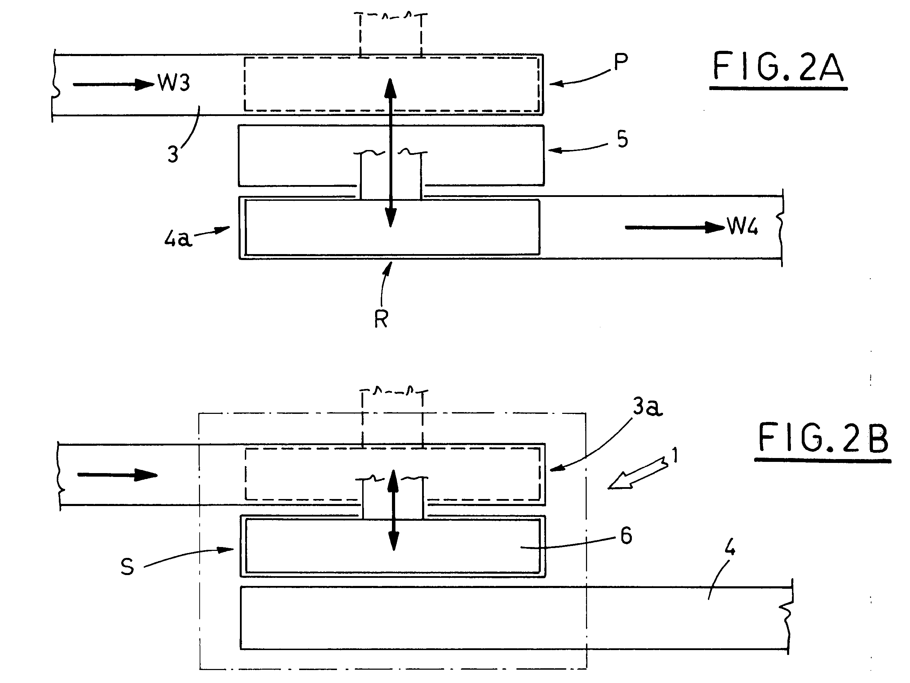

In particular, the storage means 5 of Figures 1A, 1B are situated beside the second transferring line 4; while in Figures 2A, 2B, the same storage means 5 are situated beside both lines 3, 4, between them.

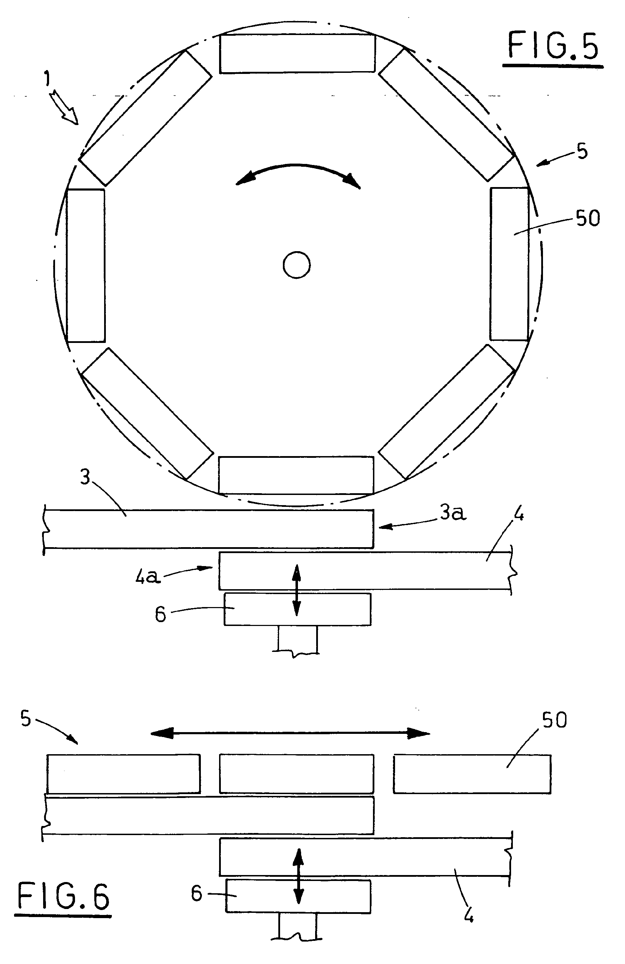

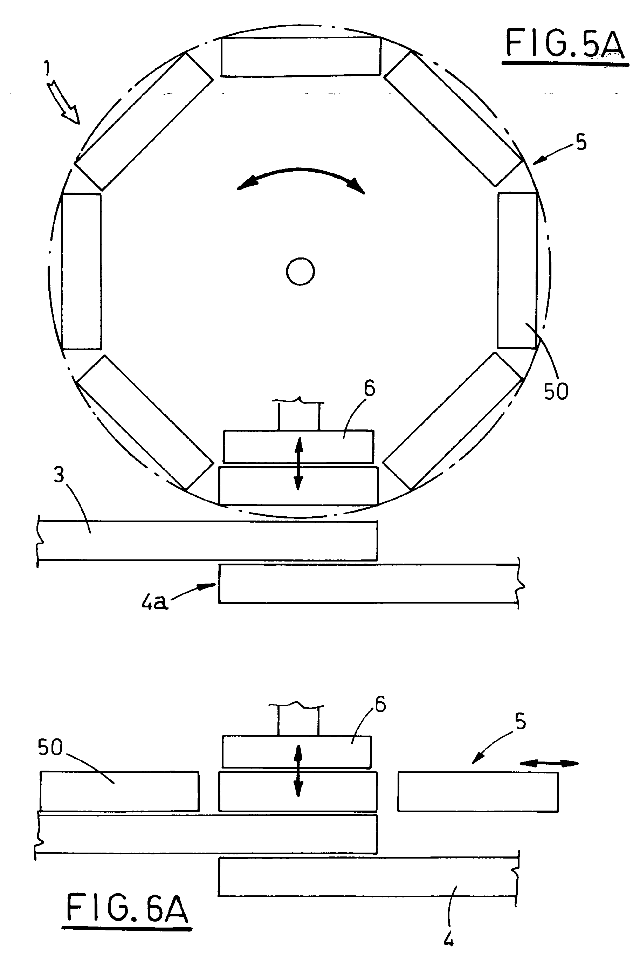

The storage means 5 shown in Figures 5, 6 are situated beside the first conveying line 3, although they have different structural characteristics.

The manipulating means 6, shown in the corresponding Figures 5A and 6A, have different positions with respect to the storage means 5, in order to reduce the station 1 dimensions.

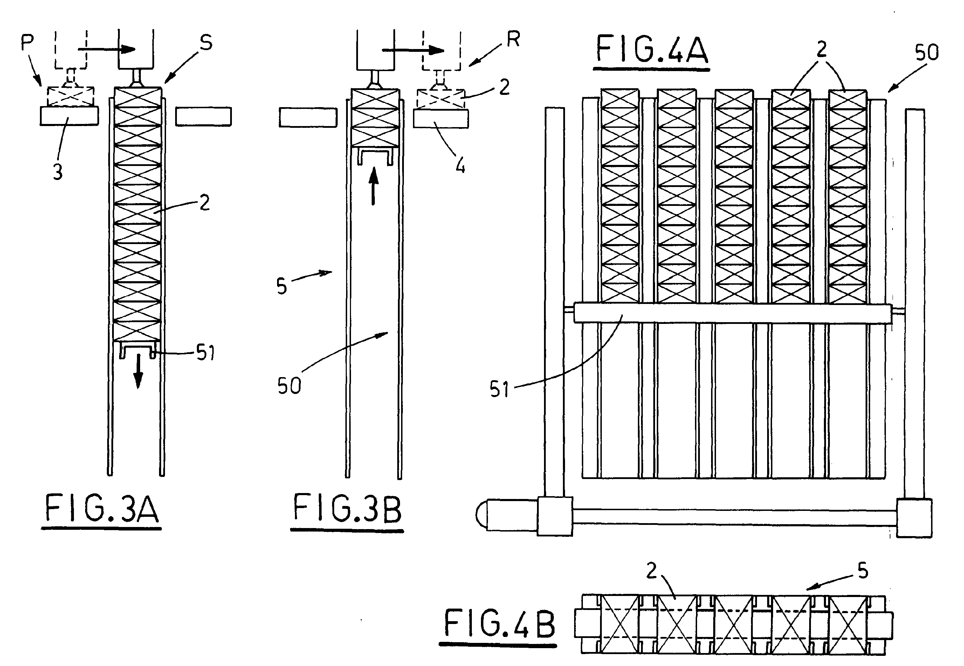

Figures 3A, 3B, 4A, 4B show particular storage means 5, formed by a container 50, which receives the items 2, coming from the first conveying line 3.

The container 50 defines a bottom 51 and relative lateral containment elements, e.g. vertical bars.

The container 50 includes also a plurality of internal separation elements, e.g. vertical bars, which define corresponding vertical portions, aimed at containing piles of items 2.

Advantageously, the bottom 51 of the container 50 moves vertically in step relation with the operation of the manipulating means 6, so as to define a kind of vertical, multi-layer magazine for dynamic stratification of the items 2.

Figures 5, 5A, 6, 6A show further storage means 5, formed by a plurality of containers 50, moving to and/or away from the first line 3 and the second line 4, in step relation with the operation of the manipulating means 6.

In particular, according to the embodiment shown in Figures 5, 5A, the containers 50 are carried by a carrousel, having a vertical axis, while according to the embodiment shown in Figures 6, 6A, the containers 50 have means for linear guiding, e.g. binary.

In the above cases, the two adjacent containers 50, previous and subsequent, can be operated to alternate, when the previous container 50 has reached the maximum storage capacity.

Figures 5, 6 show the storage means 5, which are situated beside the first conveying line 3, while the manipulating means 6 are situated beside the second transferring line 4, to define such a geometry of the station 1, that the lines 3, 4 are situated one beside the other and are introduced between the storage means 5 and the manipulating means 6.

According to Figures 5A, 6A, the storage means 5, as well as the manipulating means 6, are situated beside the first conveying line 3, to define the station 1 minimum dimension geometry, in which the storage means 5 are situated between the manipulating means 6 and the lines 3, 4, the latter being placed one beside the other.

Generally, the second line 4 for feeding the boxing machine includes a plurality of seats for receiving items 2.

According to an advantageous operation mode, the operation speed of the second transferring line 4 is higher than the operation speed of the first conveying line 3, e.g. by 10%.

In the following, the operation of the proposed station 1 will be described briefly, with reference to a general, nominal operation step, in which the manipulating means 6 are operated from a picking up configuration P, in which they pick up the items 2 from the terminal section 3a of the first conveying line 3, to a releasing configuration R, in which they place the picked up items in the initial section 4a of the second transferring line 4.

In case of the boxing machine downtime, thus of stop of the second transferring line 4, the first conveying line 3 is not deactivated and the manipulating means 6 are operated from the nominal, picking up configuration P, to pick up the items 2 from the first conveying line 3, to a stop configuration S, in which they release the items 2 to the container 50.

During the receiving of the items 2, released by the manipulating means 6, the bottom 51 of the container 50 is lowered to facilitate the accumulation of the items (Figure 3A).

If the boxing machine operation is restarted before the container 50 storage is full, the manipulating means 6 are operated between the nominal configurations, picking up configuration P and release configuration R, respectively, to transfer the items 2 again from the first conveying line 3 to the second transferring line 4.

In this nominal step, according to prefixed operation cycles, using the higher operation speed of the second transferring line 4 with respect to the first conveying line 3, the manipulating means 6 are operated cyclically between the stop configuration S and the release configuration R, so as to allow the items 2 to be picked up from the container 50 and to be transferred to the second transferring line 4 (Figure 3B).

During the releasing of the items 2, picked up by the manipulating means 6, the bottom 51 of the container 50 is raised, to facilitate the container emptying (Figure 3B) .

If the boxing machine operation is not restarted before the container 50 storage capacity is run out, the first conveying line 3 must be stopped.

In order to avoid the above, it is possible to increase the dimension of the container 50, if there is only one, or to use a plurality of containers 50, which alternate like in the carrousel and carriages solutions, as shown in Figures 6, 6A, and Figures 5, 5A, respectively.

It is possible to adjust the position of the storage means 5 with respect to the lines 3, 4 and/or with respect to the manipulating means 6, depending on the top dimension of the connecting station 1.

In particular, according to the needs, the manipulating means 6 can be placed beside one or both lines 3, 4, or, otherwise, aligned with one of the sections, initial 4a or final 3a, of the lines 3, 4.

Likewise, the manipulating means 6 can be situated beside, or aligned with the storage means 5.

It is easily understood from the above description that the proposed station for connecting a first line for conveying items with a second line for transferring the items, in particular for feeding a packaging machine, can make the working of the first conveying line independent from the working of the second transferring line.

This advantageously allows to avoid the effects of possible abnormalities of the second transferring line for feeding the packaging machine, on the correct working of the first conveying line, e.g. connected to a blistering machine, heat-formable machine, etc.

The station proposed by the invention allows also to obtain high reliability and versatility standards in any operation conditions, allowing an adjustment of the production rate to the specifics of the items size and of the packaging cycle, in a particularly rapid and easy way.

It is no less important that the proposed station is extremely functional, which assures particularly rapid and easy installation and maintenance interventions.

## Claims

1. Station for connecting a first line for conveying items with a second line for transferring the same items, in particular for feeding a packaging machine; with said lines (3, 4) being positioned angularly with respect to each other and operated in respective feeding directions (W3, W4); **characterized in that** it includes: storage means (5), situated near the terminal section (3a) of the first line (3) and the initial section (4a) of the second line (4), and receiving items (2) coming from said first conveying line (3); manipulating means (6), which are operated in step relation with the operation of said lines (3, 4), to pick up items (2) in the terminal section (3a) of said first line (3) and to release them in the initial section (4a) of said second line (4), or in said storage means (5), and which pick up items (2) from said storage means (5) and release them in the initial section (4a) of said second line (4).

2. Station, as claimed in claim 1, **characterized in that** said storage means (5) are situated beside at least one of said lines (3, 4).

3. Station, as claimed in claim 1, **characterized in that** said storage means (5) are situated between said lines (3, 4).

4. Station, as claimed in claim 1, **characterized in that** said storage means (5) are aligned with at least one of said sections, initial section (4a) or terminal section (3a) of the corresponding lines (3, 4).

5. Station, as claimed in one of the claims from 1 to 4, **characterized in that** the manipulating means (6) are situated beside at least one of said lines (3, 4).

6. Station, as claimed in one of the claims from 1 to 4, **characterized in that** the manipulating means (6) are aligned with at least one of said sections, initial section (4a) or terminal section (3a) of the corresponding lines (3, 4).

7. Station, as claimed in one of the claims from 1 to 6, **characterized in that** said manipulating means (6) are situated beside said storage means (5).

8. Station, as claimed in one of the claims from 1 to 7, **characterized in that** said manipulating means (6) are aligned with said storage means (5).

9. Station, as claimed in one of the claims from 1 to 8, **characterized in that** said storage means (5) include at least one container (50), which receives items (2) coming from said first conveying line (3), and which defines at least one bottom (51) and relative lateral containment elements.

10. Station, as claimed in claim 9, **characterized in that** said lateral containment elements are vertical guiding elements.

11. Station, as claimed in claim 9 or 10, **characterized in that** it includes, situated in said container (50), a plurality of internal separation elements, which define corresponding vertical portions for containing piles of items (2).

12. Station, as claimed in claim 11, **characterized in that** said internal separation elements include vertical guide bars.

13. Station, as claimed in one of the claims from 9 to 12, **characterized in that** the bottom (51) of said container (50) moves vertically in step relation with the operation of said manipulating means (6).

14. Station, as claimed in one of the claims from 9 to 13, **characterized in that** said storage means (5) include a plurality of containers (50) moving to and/or away from said lines (3, 4), in step relation with the operation of said manipulating means (6).

15. Station, as claimed in claim 14, **characterized in that** said storage means (5) include a carrousel, having a substantially vertical axis and carrying said plurality of containers (50).

16. Station, as claimed in claim 15, **characterized in that** said storage means (5) include means for linear guiding said plurality of containers (50).

17. Station, as claimed in one of the claims from 1 to 16, **characterized in that** said lines (3, 4) are operated to move in feeding directions (W3, W4), which are orthogonal.

18. Station, as claimed in one of the claims from 1 to 16, **characterized in that** said lines (3, 4) are operated to move in feeding directions (W3, W4), which are parallel.

19. Station, as claimed in claim 18, **characterized in that** it includes the terminal section (3a) and the initial section (4a) of said lines (3, 4), which are parallel to each other and placed partially one beside the other.

20. Station, as claimed in one of the claims from 1 to 19, **characterized in that** it includes a plurality of seats, which are situated in said first line (3) and which receive items (2).

21. Station, as claimed in one of the claims from 1 to 20, **characterized in that** it includes a plurality of seats, which are situated in said second line (4) and which receive items (2).
